Europäisches Patentamt

European Patent Office

Office européen des brevets

(11) Numéro de publication: **0 059 132**
A1

# (12) DEMANDE DE BREVET EUROPEEN

(21) Numéro de dépôt: 82400202.6

(22) Date de dépôt: 05.02.82

(51) Int. Cl.³: **B 62 M 3/08**

(30) Priorité: 23.02.81 FR 8103501
08.01.82 FR 8200232

(43) Date de publication de la demande: 01.09.82
Bulletin 82/35

(84) Etats contractants désignés: **DE GB IT**

(71) Demandeur: **Bon, Raymond E., 4, sente des Favrils,
F-78570 Andresy (FR)**

(72) Inventeur: **Bon, Raymond E., 4, sente des Favrils,
F-78570 Andresy (FR)**

(74) Mandataire: **Moulines, Pierre et al, Cabinet BEAU de
LOMENIE 55, rue d'Amsterdam, F-75008 Paris (FR)**

(54) Perfectionnement aux pédales pour cycles.

㉗ Perfectionnement aux pédales pour cycles, comportant un moyen de réglage de la position du point d'appui du pied du cycliste sur la pédale dont la surface d'appui est prolongée en avant de l'axe de pivotement sur une manivelle.

La pédale comprend une première plate-forme (1) qui est montée pivotante sur un axe (4) solidaire de la manivelle et une deuxième plate-forme (5) montée de façon réglable sur la première plate-forme (1) en avant de l'axe de pivotement (4) sur la manivelle.

L'invention est utilisée sur les pédales de cycle.

Perfectionnement aux pédales pour cycles.

La présente invention a pour objet un perfectionnement aux pédales pour cycles.

Ainsi qu'il est bien connu, la position du pied au cours des phases de pédalage est très importante pour obtenir le meilleur rendement de l'effort exercé par le cycliste sur la pédale.

La présente invention a donc pour objet de perfectionner la pédale pour obtenir la meilleure position de pédalage adaptée à la dimension du pied du cycliste afin de lui conférer un point d'appui sur la pédale qui est avancé par rapport à la position conventionnelle dans la demi-circonférence correspondant au déplacement de haut en bas, ce qui augmente le couple appliqué pendant cette période active du pédalage.

Au contraire, dans le déplacement de la pédale de bas en haut, le raccourcissement du bras de levier permet de diminuer l'effort pendant cette phase active.

Conformément à la présente invention, la pédale comprend une première plate-forme qui est montée pivotante sur un axe solidaire de la manivelle et une deuxième plate-forme montée de façon réglable sur la première plate-forme en avant de l'axe de pivotement sur la manivelle.

Cette disposition a principalement pour but d'amener le point d'appui du pied du cycliste sur l'axe de la pédale et même en avant dudit axe, de manière à utiliser totalement l'action de la manivelle.

De ce fait, les points morts haut et bas de la pédale sont modifiés pour éviter la déformation aux points haut et bas, provoquée par la cage de la pédale et, du fait de sa diminution d'épaisseur, la pédale est située plus près du centre afin d'éviter l'ovalisation de la circonférence parcourue par la manivelle et qui est provoquée par la cage de pédale.

Suivant une autre caractéristique, sur l'axe de la pédale est monté un palier tubulaire comportant un moyen de fixation réglable d'une plate-forme sur laquelle est monté de façon réglable à l'avant un cale-pied et comportant un moyen d'accrochage d'un cale-pédale fixé sous la semelle de la chaussure du cycliste.

Le dispositif suivant l'invention présente un autre mode de réalisation de la pédale qui est constitué d'un moyen simplifié de montage de la plate-forme sur l'axe de manivelle.

Ce nouveau dispositif de pédale a pour but d'éliminer le faux rond de l'ancien dispositif sur toute la circonférence, qui était dû à la cage de pédale et à son point d'appui.

Le nouveau dispositif par sa plate-forme et son point d'appui apporte un déplacement plus symétrique et un rendement supérieur de l'ensemble qui est dû à la pression du pied sur la pédale.

D'autres caractéristiques et avantages de l'invention seront mieux compris à la lecture de la description qui va suivre de plusieurs modes de réalisation et en se référant au dessin annexé sur lequel :

- la figure 1 est une vue en élévation et en coupe suivant la ligne I-I de la figure 2 d'un mode de réalisation d'une pédale perfectionnée suivant l'invention ;

- la figure 2 est une vue en plan d'un mode de réalisation d'une pédale suivant l'invention ;

- la figure 3 est une vue en élévation et en coupe suivant la ligne III-III de la figure 4 d'un autre mode de réalisation d'une pédale suivant l'invention ;

- la figure 4 est une vue en plan de la pédale représentée à la figure 3 ;

- la figure 5 est un schéma montrant les déplacements de la pédale au cours d'un tour de manivelle ;

- la figure 6 est une vue en élévation et en coupe d'un mode de réalisation d'une pédale suivant l'invention ;

- la figure 7 est une vue de dessous de la pédale ;

- la figure 8 est une vue en coupe suivant la ligne VIII-VIII de la figure 7 ;

- la figure 9 est une vue en plan d'un mode de réalisation de la plaque de fixation d'un cale-pied ;

- la figure 10 est une vue en plan d'un mode de réalisation de la plaque de fixation d'un cale-pied ;

- la figure 11 est une vue en élévation d'un mode de réalisation d'un cale-pédale monté sur une pédale classique ; et

- la figure 12 est une vue en élévation d'un autre mode de réalisation d'un moyen d'accrochage d'un cale-pédale.

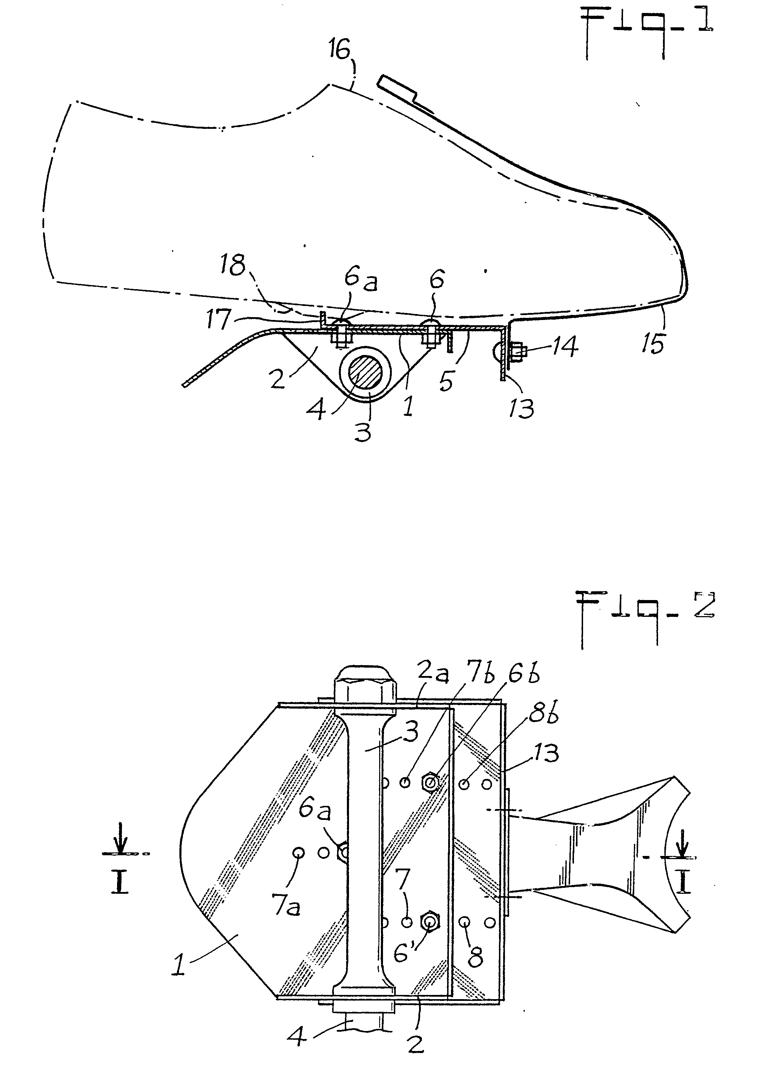

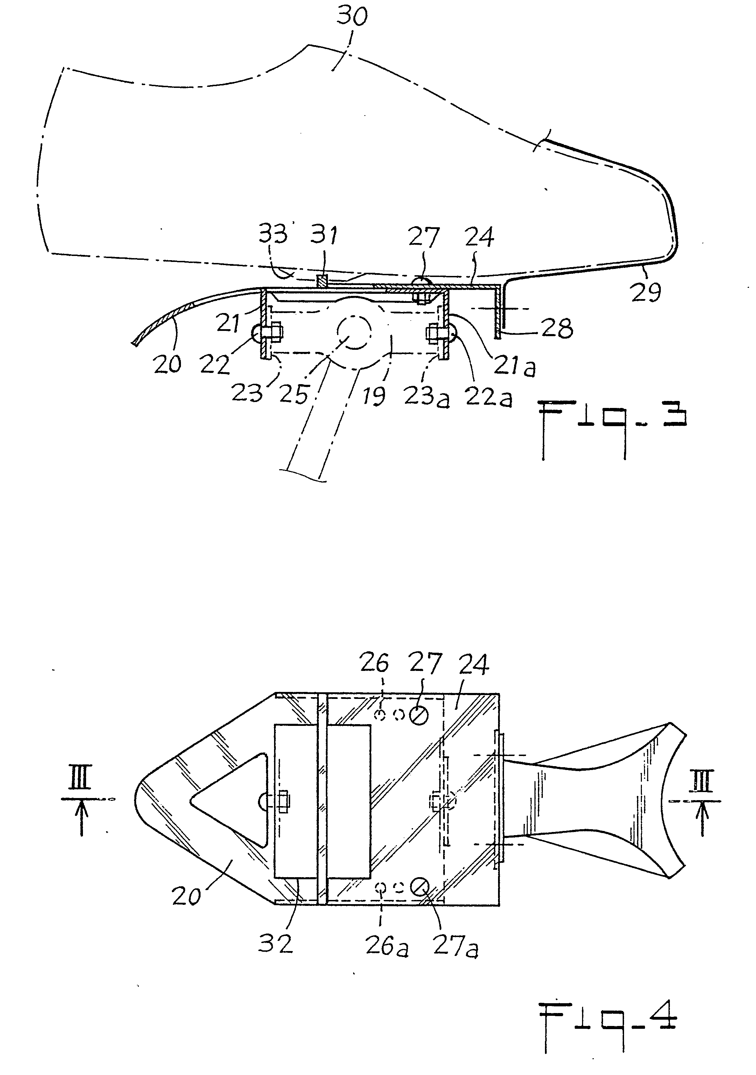

Aux figures 1 et 2, on a représenté un mode de réalisation d'une pédale suivant l'invention qui est constituée d'une première plate-forme 1 présentant deux ailes 2, 2a sur lesquelles est fixé un palier tubulaire 3 dans lequel est monté rotatif un axe 4 solidaire à l'une de ses extrémités d'une manivelle d'un pédalier de cycle non représenté au dessin.

Sur la partie antérieure de la première plate-forme 1, est montée de façon réglable en longueur une seconde plate-forme 5 qui est fixée au moyen de boulons 6, 6a, 6b engagés sélectivement dans des séries de trous 7, 7a, 7b prévus dans la première plate-forme 1 et des séries de trous 8, 8b prévus dans la seconde plate-forme 5. Cette disposition permet d'adapter la longueur de la pédale à la longueur du pied du cycliste et d'avancer le point d'appui du pied par rapport à l'axe 4 de la pédale.

A la figure 5, on a représenté le déplacement circulaire 9 de l'axe 4 de la pédale en trait continu, et en trait interrompu le déplacement circulaire 10 du point d'appui du pied avec la pédale suivant l'invention.

Il est ainsi visible sur la figure 5 que le point d'appui du pied du cycliste est avancé dans la demi-circonférence correspondant au déplacement de la pédale suivant la flèche F du point mort haut 11 vers le point mort bas 12, ce qui augmente le couple appliqué pendant cette période active du pédalage.

Au contraire, lors du déplacement de la pédale du point mort bas 12 vers le point mort haut 11, on obtient un raccourcissement du bras de levier qui permet de diminuer l'effort pendant cette phase inactive du pédalage.

A l'avant de la deuxième plate-forme 5, il est prévu un bord rabattu 13 sur lequel est fixé au moyen de boulons 14 un cale-pied 15 dans lequel est engagée l'extrémité avant de la chaussure 16 du cycliste. A l'extrémité arrière de la deuxième plate-forme 5, il est prévu une nervure 17 repliée vers le haut qui est engagée dans une rainure d'un cale-pédale 18 fixé sur la partie inférieure de la chaussure 16.

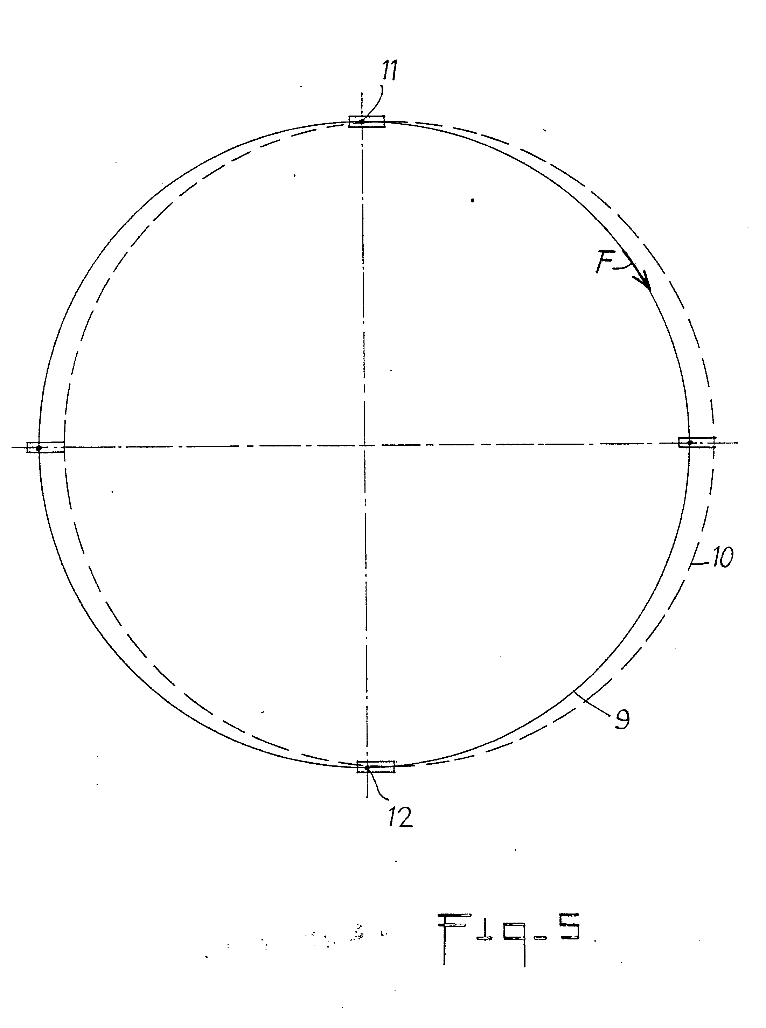

Aux figures 3 et 4, on a représenté un autre mode de réalisation de l'invention dans lequel, sur une pédale d'un type conventionnel 19, est montée une première plate-forme 20 qui présente deux pattes rabattues 21, 21a fixées au moyen de boulons 22, 22a sur les traverses 23, 23a de la pédale 19.

Comme dans le mode de réalisation précédent, une deuxième plate-forme 24 est montée de façon réglable en longueur sur la première plate-forme 20 de manière à avancer le point d'appui du pied du cycliste par rapport à l'axe 25 de pivotement de la pédale sur la manivelle.

Les plates-formes 20 et 24 comportent deux séries de trous 26, 26a dans lesquels sont montés de façon sélective des boulons de fixation 27, 27a.

A l'extrémité avant, la deuxième plate-forme 24 présente un bord rabattu 28 sur lequel est fixé de façon connue un cale-pied 29 dans lequel est engagée l'extrémité avant de la chaussure 30 du cycliste.

A l'extrémité arrière de la deuxième plate-forme 24, il est prévu une nervure transversale 31 qui est susceptible de se déplacer au-dessus d'une ouverture 32 ménagée dans la première plate-forme 20, ladite nervure 31 étant engagée dans une rainure du cale-pédale 33 fixé sous la chaussure 30.

Le réglage de la deuxième plate-forme sur la première plate-forme dans les deux modes de réalisation peut être réalisé également au moyen de lumières ou de trous allongés prévus sur les deux plates-formes et dans lesquels sont montés des boulons de fixation.

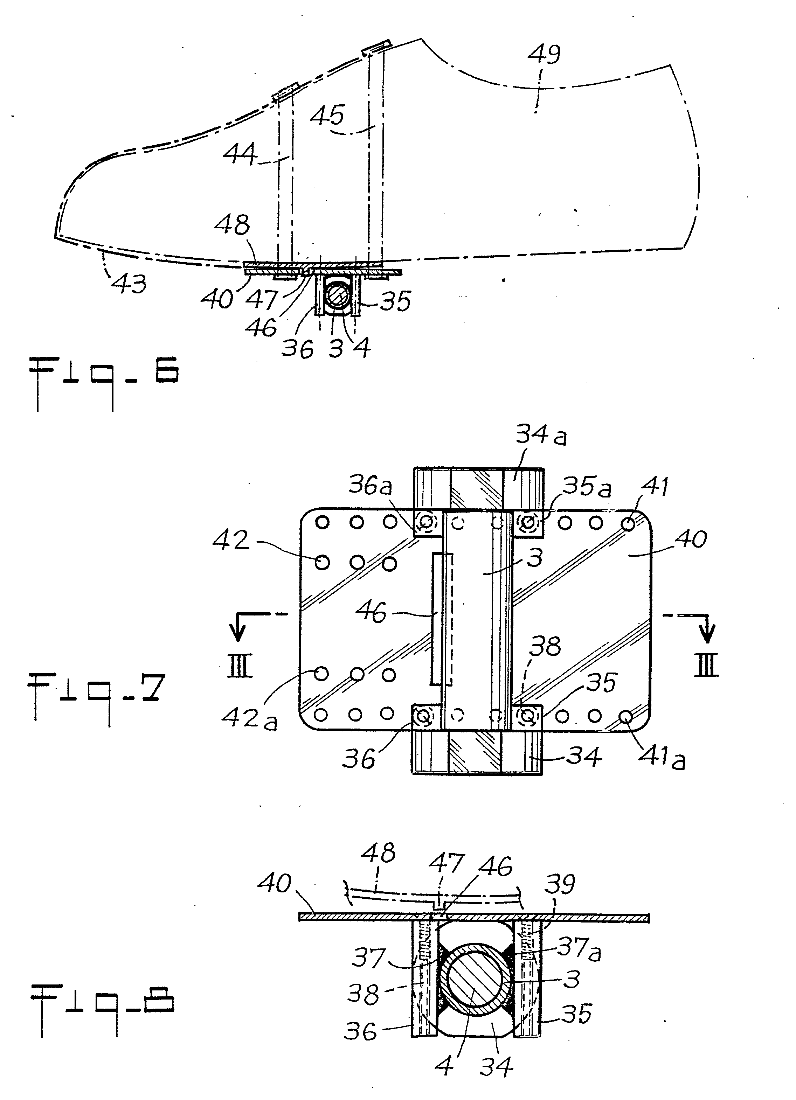

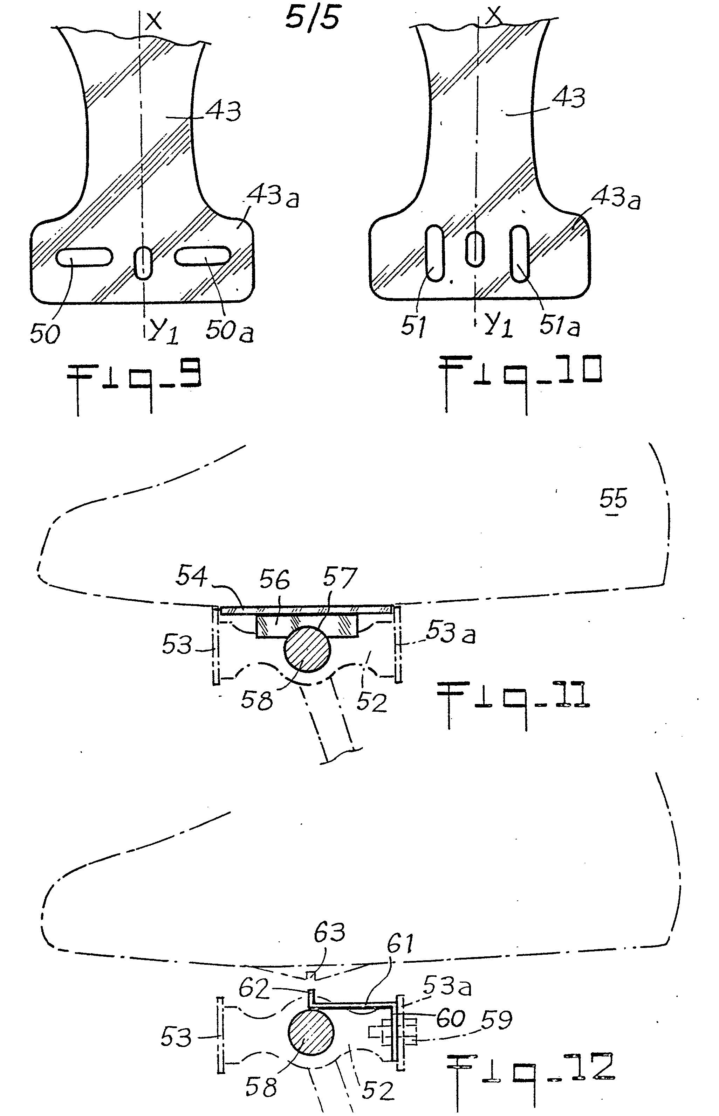

Aux figures 6, 7 et 8, on a représenté un axe de pédale 4 sur lequel est monté rotatif de façon connu le palier tubulaire 3 de la pédale qui présente à ses deux extrémités des collerettes 34, 34a contre lesquelles sont montées respectivement deux paires de cheminées 35, 36 et 35a, 36a. Les cheminées, dont les axes sont perpendiculaires à l'axe 4 de la pédale, sont fixées notamment par des soudures 37, 37a sur le palier 3.

Les cheminées 35, 36 et 35a, 36a présentent chacune un trou taraudé 38 débouchant à ses deux extrémités et dans lequel est engagée une vis 39.

Les vis 39 engagées dans les trous taraudés 38 des cheminées 35, 36 et 35a, 36a assurent la fixation d'une plate-forme 40 constituant la surface d'appui du pied du cycliste. Cette plate-forme 40 présente deux séries de trous 41, 41a pour le montage sélectif des vis de fixation 39 sur les cheminées 35, 36 et 35a, 36a permettant ainsi un réglage en position de la plate-forme 40 par rapport à l'axe 4 de la pédale et par suite un réglage de la position du pied du cycliste.

A l'avant de la plate-forme 40, il est prévu deux séries de trous 42, 42a destinés à recevoir de façon sélective des boulons de fixation non représentés au dessin pour la fixation et le réglage en position d'un cale-pied 43 qui présente deux courroies de serrage 44, 45 disposées de part et d'autre de l'axe 4 de la pédale.

Dans la plate-forme 40 il est prévu une fente 46 dans laquelle est engagée une nervure 47 d'un cale-pédale 48 fixé sous la semelle d'une chaussure 49 de cycliste. Cette disposition permet d'abaisser encore la position du point d'appui du pied par rapport à l'axe de la pédale.

A la figure 9 on a représenté une plaque de fixation 43a du cale-pied 43 qui présente deux trous oblongs 50, 50a disposés symétriquement de part et d'autre de l'axe $XX_1$ du cale-pied, lesdits trous 50, 50a étant situés suivant un même axe perpendiculaire à l'axe $XX_1$. Cette disposition permet de régler latéralement la position du cale-pied.

Suivant un autre mode de réalisation de la plaque de fixation 43a du cale-pied, il est prévu à la figure 10 deux trous oblongs 51, 51a dont les axes sont parallèles à l'axe $XX_1$ du cale-pied et qui sont disposés symétriquement de part et d'autre de l'axe $XX_1$.

A la figure 11, on a représenté une pédale classique 52 comportant des traverses 53, 53a entre lesquelles est encastrée une plaque 54 d'un cale-pédale fixé sous la semelle de la chaussure 55 d'un cycliste.

La plaque 54 est munie à sa partie inférieure d'un bossage 56 présentant un logement semi-cylindrique 57 qui est engagé sur le palier 58 de la pédale monté sur l'axe de la pédale. Cette disposition permet de maintenir le pied du cycliste dans une position déterminée par rapport à la pédale de type classique.

A la figure 12, on a représenté une pédale 52 classique présentant des traverses 53, 53a ; sur l'une des traverses 53a est fixée, au moyen de boulons 59, une patte repliée 60 d'une demi-plate-forme 61 horizontale qui présente dans la partie médiane de la pédale une nervure 62 sur laquelle est engagée une rainure 63 d'un cale-pédale fixé de façon connue sous la chaussure d'un cycliste.

Bien entendu, diverses modifications peuvent être apportées par l'homme de l'art aux dispositifs ou procédés qui viennent d'être décrits uniquement à titre d'exemples non limitatifs sans sortir du cadre de l'invention.

REVENDICATIONS

1.       Perfectionnement aux pédales pour cycles, dans lequel la pédale comporte un moyen de réglage (5, 24) de la position du point d'appui du pied du cycliste sur la pédale dont la surface d'appui est prolongée en avant de l'axe de pivotement (4, 25) sur une manivelle, caractérisé en ce que la pédale comprend une première plate-forme (1) qui est montée pivotante sur un axe (4) solidaire de la manivelle et une deuxième plate-forme (5) montée de façon réglable sur la première plate-forme (1) en avant de l'axe de pivotement (4) sur la manivelle.

2.       Perfectionnement aux pédales suivant la revendication 1, caractérisé en ce que la partie arrière de la seconde plate-forme (5) présente une nervure (17) sur laquelle est engagée une rainure d'un cale-pédale (18) fixé sous la semelle de la chaussure (16) du cycliste.

3.       Perfectionnement aux pédales suivant la revendication 1, caractérisé en ce que, sur une pédale de cycle classique (19) montée pivotante autour d'un axe (25) solidaire d'une manivelle, est fixée une première plate-forme (20) sur laquelle est montée de façon réglable en avant de l'axe de pivotement (25) de la manivelle une deuxième plate-forme (24).

4.       Perfectionnement aux pédales suivant la revendication 3, caractérisé en ce que la partie arrière de la première plate-forme (24) présente une ouverture (32) au-dessus de laquelle est susceptible de se déplacer une nervure transversale (31) solidaire de l'extrémité arrière de la deuxième plate-forme (24) et sur laquelle est engagée la rainure d'un cale-pédale (33).

5.       Perfectionnement aux pédales suivant les revendications 1 ou 3, caractérisé en ce que le moyen de réglage est constitué d'au moins une série de trous (7, 8, 26) prévus dans les première (1, 20) et deuxième (5, 24) plates-formes et dans lesdits trous est monté sélectivement au moins un organe de fixation (6, 27).

6.       Perfectionnement aux pédales suivant les revendications 1 ou 3, caractérisé en ce que le moyen de réglage est constitué d'au moins une lumière, ou trou allongé, prévue dans les première et deuxième plates-formes et dans laquelle est engagé au moins un organe de fixation.

7. Perfectionnement aux pédales pour cycles, dans lequel la pédale comporte un moyen de réglage de la position du point d'appui du pied du cycliste sur la pédale dont la surface d'appui est prolongée en avant de l'axe de pivotement sur une manivelle, caractérisé en ce que, sur l'axe (4) de la pédale, est monté un palier (3) tubulaire comportant un moyen de fixation (35, 36, 39) réglable d'une plate-forme (40) sur laquelle est monté de façon réglable à l'avant un cale-pied (43) et comportant un moyen d'accrochage d'un cale-pédale (48) fixé sous la semelle de la chaussure (49) du cycliste.

8. Perfectionnement aux pédales suivant la revendication 7, caractérisé en ce que, sur le palier tubulaire (3), sont fixées, à ses deux extrémités, des cheminées (35, 36, 35a, 36a) dont les axes sont perpendiculaires à l'axe (4) de la pédale et qui présentent chacune un trou taraudé (38) débouchant à ses deux extrémités dans lequel est engagée une vis (39) assurant la fixation de la plate-forme (40) qui présente deux séries de trous (41, 41a) pour le montage sélectif des vis de fixation sur les cheminées.

9. Perfectionnement aux pédales suivant la revendication 7, caractérisé en ce que la plate-forme (40) présente une fente (46) dans laquelle est engagée une nervure (47) solidaire du cale-pédale (48).

10. Perfectionnement aux pédales suivant la revendication 1, caractérisé en ce que le cale-pied (43) comporte deux lanières (44,45) qui sont disposées de part et d'autre de l'axe de la pédale.

11. Perfectionnement aux pédales suivant la revendication 7, caractérisé en ce que le cale-pied (43) présente dans sa partie fixée à la plate-forme (40) deux trous oblongs (50, 50a) disposés suivant un axe perpendiculaire à l'axe principal $(XX_1)$ du cale-pied.

12. Perfectionnement aux pédales suivant la revendication 7, caractérisé en ce que le cale-pied (43) présente dans sa partie fixée à la plate-forme (40) deux trous oblongs (51, 51a) disposés symétriquement suivant deux axes parallèles à l'axe principal $(XX_1)$ du cale-pied.

13. Perfectionnement aux pédales suivant la revendication 1, caractérisé en ce que le cale-pédale est constitué d'une plaque (54) encastrée entre les traverses (53, 53a) d'une pédale classique et comportant à sa partie inférieure un bossage (56) présentant un logement (57) semi-cylindrique, qui est engagé sur le palier (58) de l'axe de la pédale.

14.      Perfectionnement aux pédales suivant la revendication 1 caractérisé en ce que sur l'une des traverses (53a) d'une pédale classique (52) est fixée, par une patte (60), une demi-plate-forme horizontale (61) présentant, dans la partie médiane de la pédale, une nervure (62) sur laquelle est engagée une rainure (63) d'un cale-pédale.

Fig. 1

Fig. 2

Fig-3

Fig-4

Fig. 5

Fig. 6

Fig. 7

Fig. 8

0059132

5/5

Fig-9

Fig-10

Fig-11

Fig-12

**Office européen des brevets**

# RAPPORT DE RECHERCHE EUROPEENNE

| DOCUMENTS CONSIDERES COMME PERTINENTS | | | CLASSEMENT DE LA DEMANDE (Int. Cl. ³) |
|---|---|---|---|
| Catégorie | Citation du document avec indication, en cas de besoin, des parties pertinentes | Revendication concernée | |
| A | FR - A - 796 362 (GARRY-MICHEL) <br> * En entier * | 1,5 | B 62 M 3/08 |
| A | FR - A - 558 880 (BYRAMJEE) <br> * En entier * | 1 | |
| A | CH - A - 290 481 (GRUBER) <br> * En entier * | 1,6 | **DOMAINES TECHNIQUES RECHERCHES (Int. Cl. ³)** |
| A | GB - A - 25 154 - A.D. 1910 (YOXALL) <br> * En entier * | 1,3,5 | B 62 M 3/08 |
| A | FR - A - 858 482 (DANEL) | | |
| A | FR - A - 356 090 (NIXON) | | |

**CATEGORIE DES DOCUMENTS CITES**

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons

&: membre de la même famille, document correspondant

X Le présent rapport de recherche a été établi pour toutes les revendications

| Lieu de la recherche | Date d'achèvement de la recherche | Examinateur |
|---|---|---|
| La Haye | 14-05-1982 | SCHMITTER |